# EUROPEAN PATENT APPLICATION

(11) **EP 4 664 957 A1**
(43) Date of publication of application: **17.12.2025**
(21) Application number: 23920564.4
(22) Date of filing: 10.02.2023
(51) Int. Cl.: H04W 12/0431, H04W 12/69, H04W 12/02

(54) **INFORMATION PROCESSING METHODS AND APPARATUSES, AND COMMUNICATION DEVICE AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2023/075551
(87) International publication number: WO 2024/164357

(57) **Abstract**

Provided in the embodiments of the present disclosure are information processing methods and apparatuses, and a communication device and a storage medium. Provided in the embodiments of the present disclosure is an information processing method, which is executed by a user equipment (UE). The method comprises: sending a first request message to a first network device, wherein the first request message comprises identification information of a UE; and receiving a first response message of the first network device, wherein the first response message comprises a security key for protecting a positioning broadcast message.

## Description

### TECHNICAL FIELD

The present disclosure relates to, but is not limited to, the field of communication technologies, and in particular to an information processing method and apparatus, a communication device and a storage medium.

### BACKGROUND

According to the agreement of Radio Access Network layer 2 (RAN2), for ranging/sidelink (SL) positioning applications, part of an SL positioning signaling may be sent using broadcasting to perform mutual positioning between multiple user equipments (UEs), thereby obtaining a relative distance and/or a relative angle between two or more UEs. Generally, the UE may also be called a terminal.

### SUMMARY

Embodiments of the present disclosure provide an information processing method and apparatus, a communication device, and a storage medium.

A first aspect of the embodiments of the present disclosure provides an information processing method. The method is performed by a UE, and the method includes:
sending a first request message to a first network device, in which the first request message includes identification information for identifying the UE; and
receiving a first response message from the first network device, in which the first response message includes a security key for protecting a positioning broadcast message.

A second aspect of the embodiments of the present disclosure provides an information processing method. The method is performed by a first network device, and the method includes:
receiving a first request message sent by a UE, in which the first request message includes identification information for identifying the UE; and
sending a first response message to the UE, in which the first response message includes a security key for protecting a positioning broadcast message.

A third aspect of the embodiments of the present disclosure provides an information processing method. The method is performed by a second network device, and the method includes:
receiving a third request message sent by a first network device; and
sending a third response message to the first network device according to the third request message, in which the third response message includes a security key of a sender, in which the sender is a UE that sends a positioning broadcast message when performing positioning.

A fourth aspect of the present disclosure provides an information processing method. The method is performed by a predetermined device, and the method includes:
receiving a second request message sent by a first network device, in which the second request message includes identification information for identifying a UE;
determining, according to the second request message, a role that the UE expects to serve as when being authorized to perform positioning based on the positioning broadcast message; and
sending a second response message to the first network device in a case that it is determined that the UE is authorized to serve as the role that the UE expects to serve as when performing positioning based on the positioning broadcast message.

A fifth aspect of the embodiments of the present disclosure provides an information processing apparatus. The apparatus includes:
a first sending module, configured to send a first request message to a first network device, in which the first request message includes identification information for identifying a UE; and
a first receiving module, configured to receive a first response message from the first network device, in which the first response message includes a security key for protecting a positioning broadcast message.

A sixth aspect of the embodiments of the present disclosure provides an information processing apparatus. The apparatus is applied to a first network device, and the apparatus includes:
a second receiving module, configured to receive a first request message sent by a UE, in which the first request message includes identification information for identifying the UE; and
a second sending module, configured to send a first response message to the UE, in which the first response message includes a security key for protecting a positioning broadcast message.

A seventh aspect of the embodiments of the present disclosure provides an information processing apparatus. The apparatus includes:
a third receiving module, configured to receive a third request message sent by a first network device; and
a third sending module, configured to send a third response message to the first network device according to the third request message; in which the third response message includes a security key of a sender, in which the sender is a UE that sends a positioning broadcast message when performing positioning.

An eighth aspect of the embodiments of the present disclosure provides an information processing apparatus. The apparatus includes:
a fourth receiving module, configured to receive a second request message sent by a first network device, in which the second request message includes identification information for identifying a UE;
a determination module, configured to determine, according to the second request message, whether the UE is authorized to serve as a role that the UE expects to serve as when performing positioning based on a positioning broadcast message; and
a fourth sending module, configured to send a second response message to the first network device in a case that it is determined that the UE is authorized to serve as the role that the UE expects to serve as when performing positioning based on the positioning broadcast message.

A ninth aspect of the embodiments of the present disclosure provides an information processing method. The method is performed by a communication system, and the method includes:
sending, by a UE, a first request message to a first network device, in which the first request message includes identification information for identifying the UE;
receiving, by the first network device, the first request message sent by the UE, and sending a first response message to the UE;
receiving, by the UE, the first response message, in which the first response message includes a security key for protecting a positioning broadcast message;
in a case that the UE is authorized to serve as a sender of the positioning broadcast message, broadcasting, by the UE, the positioning broadcast message protected with the security key;
in a case that the UE is authorized to serve as a receiver of the positioning broadcast message, receiving, by the UE, the positioning broadcast message, and verifying and/or decrypting, by the UE, the positioning broadcast message using the security key.

A tenth aspect of the embodiments of the present disclosure provides a communication system. The system includes a UE and a first network device.

The UE is configured to send a first request message to a first network device, in which the first request message includes identification information for identifying the UE, and to receive a first response message, in which the first response message includes a security key for protecting a positioning broadcast message; in a case that the UE is authorized to serve as a sender of the positioning broadcast message, to broadcast the positioning broadcast message protected with the security key; in a case that the UE is authorized to serve as a receiver of the positioning broadcast message, to receive the positioning broadcast message, and to verify and/or decrypt the positioning broadcast message using the security key.

The first network device is configured to receive the first request message sent by the UE and send the first response message to the UE.

An eleventh aspect of the embodiments of the present disclosure provides a communication device. The device includes a processor, a transceiver, a memory, and an executable program stored in the memory and capable of being run by the processor. The processor, when running the executable program, executes the method provided in any one or more of the first to fourth aspects and the ninth aspect.

A twelfth aspect of the embodiments of the present disclosure provides a computer storage medium storing an executable program. After the executable program is executed by a processor, the method provided in any one or more of the first to fourth aspects and the ninth aspect is implemented.

According to the technical solutions provided by the embodiments of the present disclosure, when the UE requests to perform positioning based on the positioning broadcast message, the UE will send the first request message to the first network device. Thus, after receiving the first request message, the first network device will return the security key for security protection of the positioning broadcast message. Thus, it is convenient for the UEs to subsequently use the security key to protect the positioning broadcast message sent through broadcasting, thereby reducing the problem of tampering information of the positioning broadcast message by an illegal UE.

It should be understood that the foregoing general description and the following detailed descriptions are exemplary and explanatory only and do not limit the embodiments of the present disclosure.

### BRIEF DESCRIPTION OF THE DRAWINGS

The accompanying drawings herein are incorporated in and constitute a part of the description, illustrate embodiments consistent with the present disclosure, and together with the description, serve to explain the principles of the embodiments of the present disclosure.
FIG. 1 is a schematic structural diagram of a wireless communication system according to an example embodiment.
FIG. 2A is a schematic flow chart of an information processing method according to an example embodiment.
FIG. 2B is a schematic flow chart of an information processing method according to an example embodiment.
FIG. 2C is a schematic flow chart of an information processing method according to an example embodiment.
FIG. 3A is a schematic flow chart of an information processing method according to an example embodiment
FIG. 3B is a schematic flow chart of an information processing method according to an example embodiment.
FIG. 3C is a schematic flow chart of an information processing method according to an example embodiment.
FIG. 3D is a schematic flow chart of an information processing method according to an example embodiment.
FIG. 3E is a schematic flow chart of an information processing method according to an example embodiment.
FIG. 4A is a schematic flow chart of an information processing method according to an example embodiment.
FIG. 4B is a schematic flow chart of an information processing method according to an example embodiment.
FIG. 5A is a schematic flow chart of an information processing method according to an example embodiment.
FIG. 5B is a schematic flow chart of an information processing method according to an example embodiment.
FIG. 5C is a schematic flow chart of an information processing method according to an example embodiment.
FIG. 5D is a schematic flow chart of an information processing method according to an example embodiment.
FIG. 6 is a schematic flow chart of an information processing method according to an example embodiment.
FIG. 7 is a schematic structural diagram of an information processing apparatus according to an example embodiment.
FIG. 8 is a schematic structural diagram of an information processing apparatus according to an example embodiment.
FIG. 9 is a schematic structural diagram of an information processing apparatus according to an example embodiment.
FIG. 10 is a schematic structural diagram of an information processing apparatus according to an example embodiment.
FIG. 11 is a schematic structural diagram of a UE according to an example embodiment.
FIG. 12 is a schematic structural diagram of a network device according to an example embodiment.

### DETAILED DESCRIPTION

Reference will now be made in detail to example embodiments, examples of which are illustrated in the accompanying drawings. When the following description refers to the drawings, unless otherwise indicated, the same numbers in different drawings represent the same or similar elements. Implementations described in the following example embodiments do not represent all implementations consistent with the embodiments of the present disclosure. Rather, they are merely examples of apparatus and methods consistent with some aspects of the embodiments of the present disclosure.

The terms used in the embodiments of the present disclosure are for the purpose of describing specific embodiments only and are not intended to limit the embodiments of the present disclosure. As used in the present disclosure, the singular forms "a/an", and "the" are intended to include the plural forms as well, unless the context clearly indicates otherwise. It should also be understood that the term "and/or" used herein refer to and encompass any and all possible combinations of one or more of the associated listed items.

It should be understood that although the terms first, second, third, etc. may be used to describe various information in the embodiments of the present disclosure, the information should not be limited to these terms. These terms are used only to distinguish information of the same type from one another. For example, without departing from the scope of the embodiments of the present disclosure, first information may also be referred to as second information, and similarly, the second information may also be referred to as the first information. Depending on the context, the word "if" as used herein may be interpreted as "when", "in a case that", or "in response to determining that".

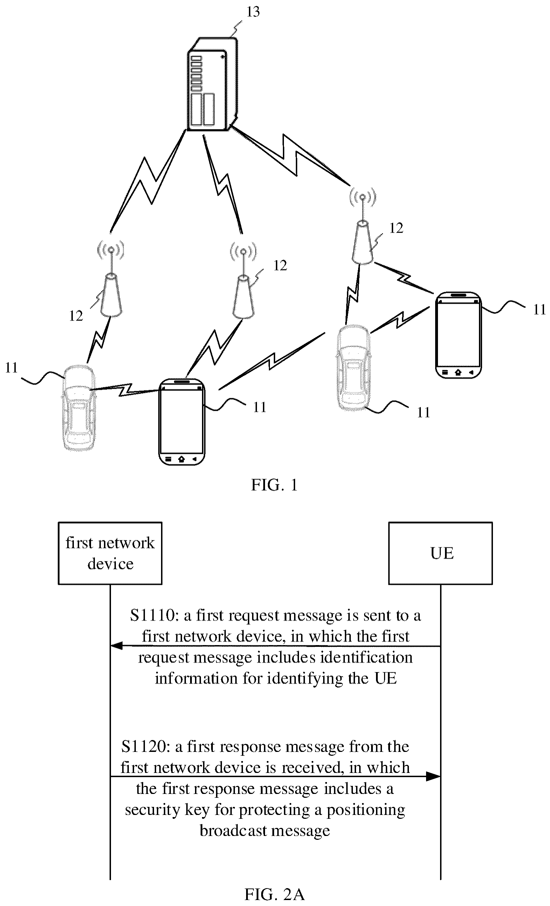

Please refer to FIG. 1, which shows a schematic structural diagram of a wireless communication system provided by an embodiment of the present disclosure. As shown in FIG. 1, the wireless communication system is a communication system based on cellular mobile communication technologies. The wireless communication system may include a plurality of user equipments (UEs) 11 and a plurality of access devices 12. In some embodiments, the communication system may further include one or more core network devices, which are not shown in FIG. 1. The core network device includes but is not limited to a Mobile Management Entity (MME) or an Access Management Function (AMF) and the like.

The UE 11 may refer to a device that provides voice and/or data connectivity to a user. The UE 11 may communicate with one or more core networks via a Radio Access Network (RAN). The UE 11 may be an IoT UE, such as a sensor device, a mobile phone (or a cellular phone), and a computer with an IoT UE, for example, a fixed, portable, pocket-sized, handheld, computerbuilt-in, or vehicle-mounted apparatus. For example, a station (STA), a subscriber unit, a subscriber station, a mobile station, a mobile, a remote station, an access point, a remote terminal, an access terminal, a user terminal, a user agent, user device, or a UE. Alternatively, the UE 11 may also be a device of an unmanned aerial vehicle. Alternatively, the UE 11 may also be a vehicle-mounted device, for example, a driving computer with a wireless communication function, or a wireless communication device externally connected to the driving computer. Alternatively, the UE 11 may also be a roadside device, for example, a street lamp, a signal lamp or other roadside device with a wireless communication function.

The access device 12 may be a network side device in the wireless communication system. The wireless communication system may be a fourth generation mobile communication technology (4G) system, also known as a long term evolution (LTE) system; or the wireless communication system may be a 5G system, also known as a new radio (NR) system or a 5G NR system. Alternatively, the wireless communication system may also be a next generation system beyond the 5G system. The access network in the 5G system may be called a New Generation-Radio Access Network (NG-RAN), or an MTC system.

The access device 12 may be an evolved base station (eNB) used in the 4G system. Alternatively, the access device 12 may also be a base station (gNB) adopting a centralizeddistributed architecture in the 5G system. When the access device 12 adopts the centralizeddistributed architecture, it usually includes a centralized unit (CU) and at least two distributed units (DUs). The centralized unit is provided with a Packet Data Convergence Protocol (PDCP) layer, a Radio Link Control (RLC) layer, and a Media Access Control (MAC) layer protocol stack. The distributed unit is provided with a Physical (PHY) layer protocol stack. The embodiments of the present disclosure do not limit the specific implementations of the access device 12.

A wireless connection may be established between the access device 12 and the UE 11 via a radio air interface. In different implementations, the radio air interface is a radio air interface based on the fourth generation mobile communication network technology (4G) standard; or the radio air interface is a radio air interface based on the fifth generation mobile communication network technology (5G) standard, for example, the radio air interface is a new air interface; or the radio air interface may also be a radio air interface based on the next generation mobile communication network technology standard beyond 5G.

Since a sidelink (SL) positioning capability and an SL positioning assistance data are information used to obtain a ranging result (e.g., location information), their integrity needs to be protected to prevent them from being tampered with or leaked. The positioning capability and the location information of SL are related to the privacy of the UE, so they need to be encrypted to protect the privacy of the UE or prevent tampering by other illegal devices. In related art, an SL positioning signaling sent in broadcasting lacks a security protection mechanism, so there is a risk of the signaling being tampered with or the privacy information being leaked. Therefore, in order to make the SL positioning broadcasting to have the security protection, it is necessary to study a method to protect the SL positioning signaling broadcast by the UE with ranging/SL positioning functions.

As shown in FIG. 2A, an embodiment of the present disclosure provides an information processing method, which is performed by a UE and includes the following steps.

S1110, a first request message is sent to a first network device, in which the first request message includes identification information for identifying the UE.

S1120, a first response message from the first network device is received, in which the first response message includes a security key for protecting a positioning broadcast message.

The UE may be any terminal that is able perform positioning between UEs based on the positioning broadcast message. The terminal may include: a mobile phone, a tablet computer or a wearable device, a smart home device, a smart office device, a vehicle-mounted device, an industrial device and/or a flight device, etc.

The first network device here may be a core network device, which includes but is not limited to a Proximity Service Key Management Function (PKMF), a Direct Discovery Name Management Function (DDNMF), and/or a Policy Control Function (PCF).

The positioning broadcast message may be used as a broadcast message for mutual positioning between UEs. The broadcast message is a message sent by a sender in a broadcast manner or a message sent on an SL broadcast channel.

The UE that performs the information processing method may be a sending UE (or broadcasting UE, which may be represented by B-UE), that is, the sender of the positioning broadcast message; or may be a receiving UE (which may be represented by R-UE), that is, a UE that receives the positioning broadcast message.

In some implementations, the UE that performs the information processing method is a B-UE, and the first network device may be a DDNMF, a PKMF, or a PCF that provides services for the B-UE.

In some implementations, the UE that performs the information processing method is an R-UE, and the first network device may be a DDNMF, a PKMF, or a PCF that provides services for the R-UE.

The DDNMFs, PKMFs or PCFs providing services for the B-UE and the R-UE may be the same or different. For example, if the Public Land Mobile Networks (PLMNs) to which the B-UE and R-UE belong are the same, then the DDNMFs, PKMFs or PCFs providing services for the B-UE and R-UE are the same. That is, if communication operators for the B-UE and R-UE are the same or have a related relationship such as cooperation, then the DDNMFs, PKMFs or PCFs providing services for the B-UE and R-UE are the same. If the PLMNs to which the B-UE and the R-UE belong are different, the DDNMFs, PKMFs or PCFs providing services for the B-UE and the R-UE may be different.

The first request message may be any of various types of message that the UE may transmit to the first network device. For example, the first request message may be a PC3a, a PC8 or a non-access stratum (NAS) message. For example, the first request message may be a Key Request message in the PC3a, PC8 or NAS message.

The first request message may include the identification information for identifying the UE. The identification information for identifying the UE may be any information that is able to uniquely identify the UE.

Exemplarily, the identification information for identifying the UE includes but is not limited to a User Info Identifier (User Info ID), or a Subscriber Permanent Identifier (SUPI). Of course, the above is only an example of the identification information for identifying the UE, and the specific implementations are not limited to the example. The first request message carries the identification information for identifying the UE, so that the first network device can know the UE that currently requests the security key. In some embodiments, the first request message may be a message for a UE-specific request for the security key to be used when performing positioning based on the positioning broadcast message. In this case, if the first network device receives the message and determines that it is the first request message by decoding a message format, etc., the first network device considers that the UE is requesting the security key.

In some embodiments, the first request message may include an indicator carrying the security key for performing positioning between UEs based at least on the positioning broadcast message.

The security key may be a security key of the B-UE, that is, the security key of the UE that sends the positioning broadcast message.

The security key may include: an integrity key used for integrity protection of the positioning broadcast message; and/or a confidentiality key used for encryption and decryption of the positioning broadcast message, to protect the confidentiality of the positioning broadcast message.

In summary, the security key may be used for security protection of the positioning broadcast message. For example, the security key is used to perform integrity protection and/or confidentiality protection on the positioning broadcast message.

In some implementations, the UE that performs the information processing method is the B-UE, and the first response message carries its own security key used for integrity protection and/or confidentiality protection of the positioning broadcast message.

In some embodiments, the UE that performs the information processing method is the RUE, and the first response message carries the security key of the B-UE. The security key may be used to perform integrity verification and/or confidentiality protection and other related operations on the positioning broadcast message broadcast by the B-UE.

In this way, if the UE receives the first response message, the security key can be used to protect the security of the positioning broadcast message, thereby reducing the security issues caused by the tampering of the broadcast positioning broadcast message or the leakage of privacy, thereby improving the security of the mutual positioning between the B-UE and the R-UE based on the positioning broadcast message.

In some embodiments, the first request message includes first indication information, and/or second indication information, and/or third indication information.

The first indication information indicates a role that the UE expects to serve as when performing positioning; in which the role includes a sender of the positioning broadcast message, or a receiver of the positioning broadcast message.

The second indication information indicates whether to perform positioning based on the positioning broadcast message.

The third indication information indicates information related to a positioning requirement.

In some embodiments, the role may include the sender of the positioning broadcast message or the receiver of the positioning broadcast message.

The UE may determine the role it needs to serve as based on its own capability, a configuration of a contracted service and/or a current application requirement. For example, if the UE determines that it expects to serve as the sender of the positioning broadcast message, it may indicate this through the first indication information in the first request message, for example, through a first indicator. If the UE determines that it expects to serve as the receiver of the positioning broadcast message, it may indicate this through the first indication information in the first request message, for example, through a second indicator. In this way, after the first network device on the network receives the first indication information, it may know the role that the UE itself expects to serve as or requests to serve as.

The positioning between UEs may be performed based on a unicast positioning message, or may be performed based on the positioning broadcast message as mentioned in the embodiments of the present disclosure. At this time, the first request message may provide the second indication information, and the second indication information may include one or more bits, indicating whether the UE currently requests the positioning between UEs based on the positioning broadcast message or the positioning between UEs based on the unicast message.

In some embodiments, the communication operator may deploy a network device related to performing the positioning function. The network device may perform a basic positioning function and may meet the positioning requirement at the UE system level. For example, when the MAC layer or RLC layer of the UE generates the positioning requirement, the UE may request the positioning-related service provided by the communication operator. In some embodiments, there are cases where an application (APP) layer of the UE generates the positioning requirement. For example, for a behavior requirement generated by a specific APP, a server that provide the positioning requirement for the APP may be involved.

The aforementioned third indication information may directly or indirectly indicate a source of the positioning requirement and/or a device involved in the positioning requirement.

In some embodiments, the third indication information includes a service code of a positioning application, or an indicator of a positioning function.

The positioning application provided by the embodiments of the present disclosure may include: relative positioning between UEs, and/or a service related to absolute positioning of the UEs that is performed based on the relative positioning between the UEs. For example, the relative location information between the UEs obtained by the relative positioning application includes but is not limited to a relative distance and/or a relative angle. The absolute positioning may determine absolute location information of one UE based on known location information of another UE. The typical absolute location information may include, but is not limited to, longitude and latitude, and/or coordinate values of a world coordinate system.

The positioning application includes but is not limited to: a Ranging/SL positioning application code (RSSC), and/or other services.

If the third indication information includes the service code of the positioning application, a server or an application function (AF) involved in issuing the security key may be determined according to the service code of the positioning application. The server or AF may be deployed in a core network (CN). Alternatively, the server or AF may be deployed outside the CN, for example, and may exchange information with a core network device in the CN through a Network Exposure Function (NEF).

Since the communication operator provides the positioning function, if the positioning requirement of the UE cannot determine a specific service type and/or the positioning requirement is generated by a specific positioning application, the first request message may carry the indicator of the positioning function. In this way, after receiving the indicator of the positioning function, the first network device may know that it may not be related to the service, and may directly complete the issuing of the security key based on the service of the network device.

It is worth noting that: when the UE is authorized to serve as the role it expects to serve as when the UE performs positioning, the first response message includes the security key; or when the UE is not authorized to serve as the role it expects to serve as when the UE performs positioning, the first response message does not include the security key.

In some embodiments, when the UE is authorized to serve as the role it is expected to play when the UE performs positioning, the first response message includes the security key. When the UE is not authorized to serve as the role it expects to serve as when the UE performs positioning, the response message received by the UE from the first network device does not include the security key, that is, the response message returned by the first network device based on the first request message would not include the security key, and this response message would be a response failure message.

The first response message may include a response success message and/or a response failure message.

The response success message indicates that the authorization succeeds. The response success message will contain the security key.

The response failure message will not contain the security key, which means that the authorization fails. Furthermore, the response failure message may include a failure cause code indicating a cause of the failure, or/and a failure indication code directly indicating the failure.

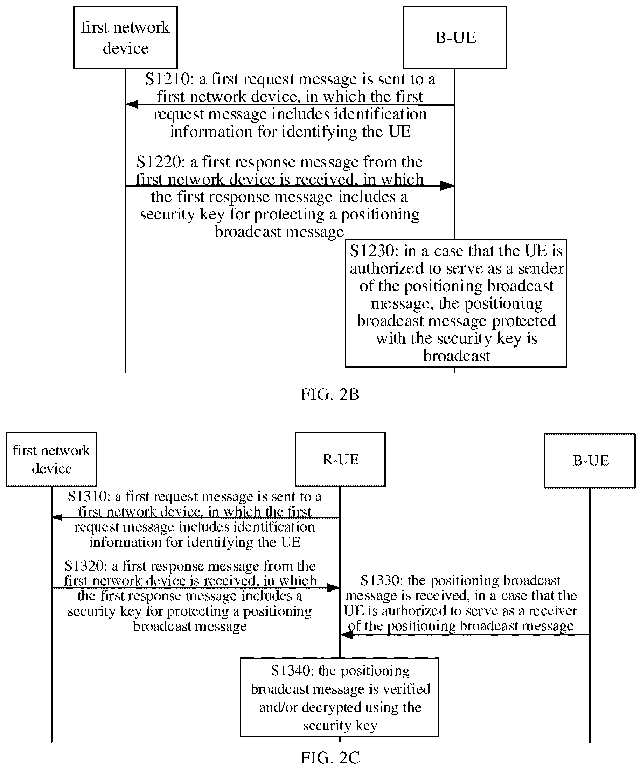

As shown in FIG. 2B, an embodiment of the present disclosure provides an information processing method, which is performed by a UE and includes the following the steps.

S1210, a first request message is sent to a first network device, in which the first request message includes identification information for identifying the UE.

S1220, a first response message from the first network device is received, in which the first response message includes a security key for protecting a positioning broadcast message.

S1230, in a case that the UE is authorized to serve as a sender of the positioning broadcast message, the positioning broadcast message protected with the security key is broadcast.

In the information processing method, the UE requests or expects to serve as the sender of the positioning broadcast message, so the first network device is the DDNMF, PKMF or PCF of the B-UE.

If the UE is authorized to serve as the B-UE, the UE will receive the first response message returned by its serving DDNMF, PCF or PKMF, and the first response message includes the UE's own security key. After receiving the security key, the B-UE will broadcast the positioning broadcast message protected with the security key, such that the positioning broadcast message will be securely protected with the security key. In this way, after the positioning broadcast message is broadcast, the problems of tampering of illegal devices and leakage are reduced, thereby improving the security of the positioning broadcast message.

For example, the positioning broadcast message may be protected with the security key, then a legitimate receiver may verify the security protection through the security key, for example, perform integrity verification and/or confidentiality-based decryption. This reduces the possibility of leakage of the sender's location-related privacy information, reduces the possibility of the receiver receiving tampered location broadcast messages, reduces the problems caused by the receiver receiving illegal messages such as viruses, and improves the sender's privacy security and the receiver's information reception security.

When the aforementioned UE expects or requests to serve as the sender of the positioning broadcast message, the first request message sent by the UE may include first indication information, second indication information, and/or third indication information.

The first indication information indicates a role that the UE expects to serve as when performing positioning, in which the role includes a sender of the positioning broadcast message, or a receiver of the positioning broadcast message.

The second indication information indicates whether to perform positioning based on the positioning broadcast message.

The third indication information indicates information related to a positioning requirement.

As shown in FIG. 2C, an embodiment of the present disclosure provides an information processing method, which is performed by a UE and includes the following steps.

S1310, a first request message is sent to a first network device, in which the first request message includes identification information for identifying the UE.

S1320, a first response message from the first network device is received, in which the first response message includes a security key for protecting a positioning broadcast message.

S1330, the positioning broadcast message is received, in a case that the UE is authorized to serve as a receiver of the positioning broadcast message.

S 1340, the positioning broadcast message is verified and/or decrypted using the security key.

If the UE expects or requests to serve as the receiver of the positioning broadcast message, the first network device may be the DDNMF, PKMF or PCF of the R-UE.

For example, when the UE is authorized to serve as the receiver of the positioning broadcast message, it will receive the first response message including the security key of the sender. For example, the first response message at this time may include the security key of one or more B-UEs.

When the R-UE monitors a broadcast channel of SL, it may monitor the positioning broadcast message. After monitoring the positioning broadcast message, it uses the received one or more security keys to perform security verification, for example, integrity verification and/or confidentiality verification. After the verification is passed, it will perform the subsequent positioning operation based on the information content of the positioning broadcast message. If the monitored positioning broadcast message fails to pass the security verification, for example, fails to pass the integrity verification and/or the confidentiality verification, the monitored positioning broadcast message will be discarded.

When the UE expects or requests to serve as the receiver of the positioning broadcast message, the first request message sent by the UE may include:
first indication information, in which the first indication information indicates the receiver of the positioning broadcast message that the UE expects to serve as when performing positioning;
second indication information, in which the second indication information indicates whether to perform positioning based on the positioning broadcast message; and/or,
third indication information, in which the third indication information indicates information related to a positioning requirement. For example, the third indication information may include a service code of a positioning application and/or an indicator of a positioning function, etc.

It is worth noting that in the information processing methods shown in FIG. 2B and/or 2C, the positioning broadcast message sent by the B-UE may include at least one of:
identification information for identifying the B-UE, for example, the identification information for identifying the B-UE may be a user info ID and/or SUPI of the B-UE;
a positioning signaling, for example, for ranging/SL positioning applications, the positioning signaling may include an SL positioning signaling; or
third indication information, for example, the third indication information includes the service code of the positioning application and/or the indicator of the positioning function, etc.

For example, the positioning signaling may include at least one of:
capability information of the B-UE, indicating a capability of the B-UE, illustratively indicating a positioning capability of the B-UE based on the capability information of the B-UE;
positioning assistance information, which may be information related to the B-UE location, for example, the positioning assistance information may include absolute position information of the B-UE, etc.

For example, the positioning signaling may also include a transmission parameter of a subsequent positioning signal. For example, the transmission parameter may include indication information of a time-frequency domain resource, and/or a signal type of the positioning signal, etc.

Of course, the above are merely examples of the positioning signaling. In a specific implementation, the relevant content of positioning signaling is not limited to the above examples.

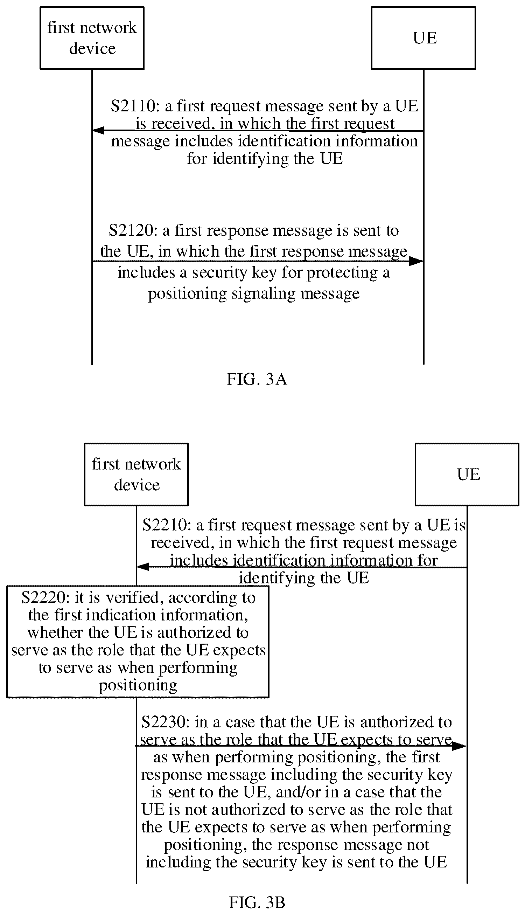

As shown in FIG. 3A, an embodiment of the present disclosure provides an information processing method, which is performed by a first network device and includes the following steps.

S2110, a first request message sent by a UE is received, in which the first request message includes identification information for identifying the UE.

S2120, a first response message is sent to the UE, in which the first response message includes a security key for protecting a positioning signaling message.

The first network device may be a core network device, and the core network device may include but is not limited to a PKMF, a DDNMF or a PCF.

The first request message may come from a UE that expects or requests to serve as a sender of a positioning broadcast message, or may come from a UE that expects or requests to serve as a receiver of the positioning broadcast message.

After receiving the first request message from the UE, in order to ensure the security of the positioning broadcast message in the subsequent positioning procedure between UEs, a security key will be sent to the UE through the first response message.

The security key may be generated based on the first request message of the B-UE, and is a security key of the B-UE.

The security key may include at least one of:
an integrity key of the B-UE; or
a confidentiality key of the B-UE .

For example, the first request message further includes first indication information, second indication information, and/or third indication information.

The first indication information indicates a role that the UE expects to serve as when performing positioning. The role includes a sender of the positioning broadcast message, or a receiver of the positioning broadcast message.

The second indication information indicates whether to perform positioning based on the positioning broadcast message.

The third indication information indicates information related to a positioning requirement.

In some embodiments, the roles may include at least the sender of the positioning broadcast message and the receiver of a positioning broadcast message.

The UE may determine the role it needs to serve as based on its own capability, a configuration of a contracted service and/or a current application requirement. For example, if the UE determines that it expects to serve as the sender of the positioning broadcast message, it may indicate this through the first indication information in the first request message, for example, through a first indicator. If the UE determines that it expects to be the receiver of the current positioning broadcast message, it may indicate this through the first indication information in the first request message, for example, through a second indicator. In this way, after the first network device on the network receives the first indication information, it can know the role that the UE itself expects to serve as or requests to serve as.

The positioning between UEs may be performed based on a unicast positioning message, or may be performed based on the positioning broadcast message as mentioned in the embodiments of the present disclosure. At this time, the first request message may provide the second indication information, and the second indication information may include one or more bits, indicating whether the UE currently requests positioning between UEs based on the positioning broadcast message or positioning between UEs based on a unicast message.

In some embodiments, a communication operator may deploy a network device related to performing a positioning function. The network devices may perform the basic positioning function and may meet the positioning requirement at the UE system level. For example, when a MAC layer or an RLC layer of the UE generates the positioning requirement, the UE may request the positioning-related service provided by the communication operator. In some other embodiments, in some cases, an application layer of the UE generates the positioning requirement, for example, based on a behavior requirement generated by a specific APP, a server that provides the positioning requirement for the APP may be involved.

The aforementioned third indication information may directly or indirectly indicate a source of the positioning requirement and/or a device involved in the positioning requirement.

In some embodiments, the third indication information includes a service code of a positioning application, or an indicator of a positioning function.

The positioning application provided by the embodiments of the present disclosure may include a relative positioning between UEs, and/or a service related to absolute positioning of UEs that is performed based on the relative positioning between the UEs. For example, the relative location information between the UEs obtained by the relative positioning application includes but is not limited to a relative distance and/or a relative angle. The absolute positioning may determine absolute location information of one UE based on known location information of another UE. The typical absolute location information may include, but is not limited to, longitude and latitude, and/or coordinate values of a world coordinate system

The positioning application includes but is not limited to: an RSSC, and/or other services.

If the third indication information includes the service code of the positioning application, a server or an AF involved in issuing the security key may be determined according to the service code of the positioning application. The server or AF may be deployed in a CN. Alternatively, the server or AF may be deployed outside the CN, for example, and may exchange information with a core network device in the CN through an NEF.

Since the communication operator provides the positioning function, if the positioning requirement of the UE cannot determine a specific service type and/or the positioning requirement is generated by a specific positioning application, the first request message may carry the indicator of the positioning function. In this way, after receiving the indicator of the positioning function, the first network device may know that it may not be related to the service, and may directly complete the issuing of the security key based on the service of the network device.

As shown in FIG. 3B, an embodiment of the present disclosure provides an information processing method, which is performed by a first network device and includes the following steps.

S2210, a first request message sent by a UE is received, in which the first request message includes identification information for identifying the UE.

S2220, it is verified, according to the first indication information, whether the UE is authorized to serve as the role that the UE expects to serve as when performing positioning.

S2230, in a case that the UE is authorized to serve as the role that the UE expects to serve as when performing positioning, the first response message including the security key is sent to the UE, and/or in a case that the UE is not authorized to serve as the role that the UE expects to serve as when performing positioning, the response message not including the security key is sent to the UE.

In some embodiments, the first network device may authorize whether the UE sending the first request message may serve as the role that the UE requests or expects to serve as based on various locally stored subscription information of the UE, locally stored rough information and/or authorization rules.

In some other embodiments, the first network device may also authorize the UE sending the first request message through interaction with other devices.

The authorization from the first network device for the UE sending the first request message can reduce the phenomenon of illegal UE forging the first request message to request the security key, thereby reducing the security problem of the security key.

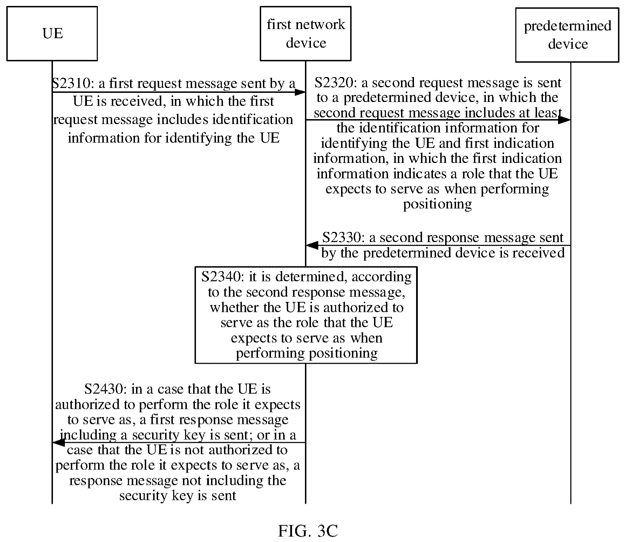

As shown in FIG. 3C, an embodiment of the present disclosure provides an information processing method, which is performed by a first network device and includes the following steps.

S2310, a first request message sent by a UE is received, in which the first request message includes identification information for identifying the UE.

S2320, a second request message is sent to a predetermined device, in which the second request message includes at least the identification information for identifying the UE and first indication information, in which the first indication information indicates a role that the UE expects to serve as when performing positioning.

S2330, a second response message sent by the predetermined device is received.

S2340, it is determined, according to the second response message, whether the UE is authorized to serve as the role that the UE expects to serve as when performing positioning.

S2430, in a case that the UE is authorized to perform the role it expects to serve as, a first response message including a security key is sent; or in a case that the UE is not authorized to perform the role it expects to serve as, a response message not including the security key is sent.

The predetermined device may be used to determine whether the UE is authorized to serve as the role it expects or requests to play.

For example, the first request message is sent based on the positioning application, when determining whether the UE is authorized to serve as its expected or requested role, the server or AF of the positioning application may first authorize whether the UE is authorized to participate in the positioning application, and then authorize whether the UE is authorized to serve as its expected or requested role. For example, in some cases, a UE may participate in the positioning application but is only authorized to serve as the receiver of the positioning broadcast message, while another UE may be authorized not only to serve as the receiver of the positioning broadcast message but also to serve as the sender of the positioning broadcast message.

As another example, the first request message is sent by the UE based on a positioning function, and thus, the predetermined device may be a core network device. The core network device may be a network device storing a subscription data of the UE.

In summary, in the embodiments of the present disclosure, the predetermined device is determined by a generation source related to the positioning requirement.

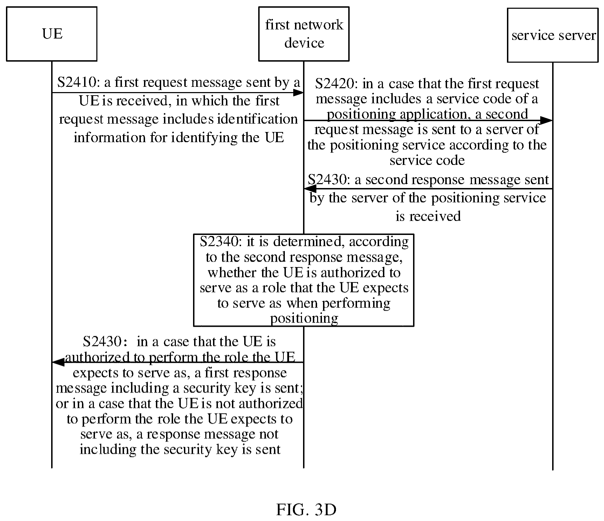

As shown in FIG. 3D, an embodiment of the present disclosure provides an information processing method, which is performed by a first network device and includes the following steps.

S2410, a first request message sent by a UE is received, in which the first request message includes identification information for identifying the UE.

S2420, in a case that the first request message includes a service code of a positioning application, a second request message is sent to a server of the positioning application according to the service code.

S2430, a second response message sent by the server of the positioning application is received.

S2440, it is determined, according to the second response message, whether the UE is authorized to serve as a role that the UE expects to serve as when performing positioning.

S2450, in a case that the UE is authorized to perform the role the UE expects to serve as, a first response message including a security key is sent; or in a case that the UE is not authorized to perform the role the UE expects to serve as, a response message not including the security key is sent.

For example, if the positioning application is a ranging/SL positioning application, the first network device will receive the service code of the ranging/SL positioning application (RSSC), and send the second request message to an RSSC server according to the RSSC. Therefore, the UE may be authorized to serve as its expected role based on the ranging/SL positioning server.

In this way, the server or AF of the positioning application can authorize the UE to serve as the sender or the receiver of the positioning broadcast message, so as to ensure that whether the sender and receiver of the positioning broadcast message are legitimate can be verified.

In some embodiments, the method further includes:
generating the security key, in case that the UE is authorized to serve as the sender of the positioning broadcast message.

If the UE is authorized to serve as the sender of the positioning broadcast message, the first network device may generate, according to a key generation algorithm, the security key to be used by the B-UE based on the identification information for identifying the B-UE and other generation parameters. In this case, the first network device does not need to request the security key from other devices.

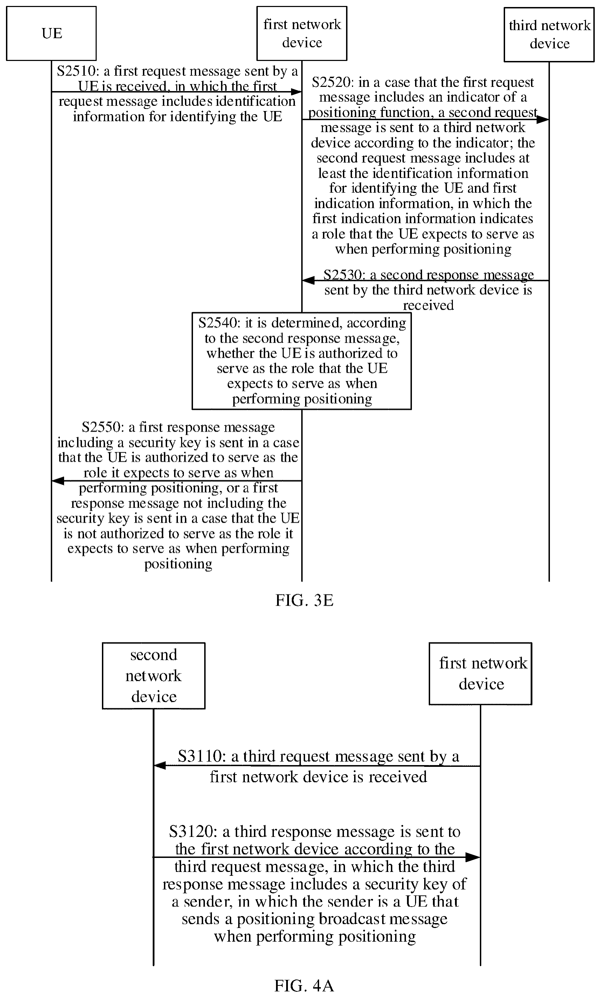

As shown in FIG. 3E, an embodiment of the present disclosure provides an information processing method, which is performed by a first network device and includes the following steps.

S2510, a first request message sent by a UE is received, in which the first request message includes identification information for identifying the UE.

S2520, in a case that the first request message includes an indicator of a positioning function, a second request message is sent to a third network device according to the indicator; the second request message includes at least the identification information for identifying the UE and first indication information, in which the first indication information indicates a role that the UE expects to serve as when performing positioning.

S2530, a second response message sent by the third network device is received.

S2540, it is determined, according to the second response message, whether the UE is authorized to serve as the role that the UE expects to serve as when performing positioning.

S2550, a first response message including a security key is sent in a case that the UE is authorized to serve as the role it expects to serve as when performing positioning, or a first response message not including the security key is sent in a case that the UE is not authorized to serve as the role it expects to serve as when performing positioning.

The third network device includes but is not limited to a core network device, such as a User Data Management (UDM), and/or a Unified Data Repository (UDR).

The third network device may query whether the UE has signed a contract for the positioning function between UEs based on the positioning broadcast message. If the UE has signed the contract for the positioning function, it may at least determine that the UE may participate in the positioning function based on the positioning broadcast message. In some cases, the subscription data may be used to determine whether the UE can serve as the sender and/or receiver of the positioning broadcast message. In this way, the third network device may also determine whether the corresponding UE is authorized to be the sender and/or the receiver of the positioning broadcast message according to the subscription data.

In some embodiments, based on the method shown in FIG. 3C, when the UE is authorized to serve as the receiver of the positioning broadcast message, the second response message also includes sender information of the positioning broadcast message. The sender information is used by the first network device to determine the second network device for obtaining the security key.

The sender information may include, but is not limited to: the identification information for identifying the sender and/or an address of a DDNMF, PKMF and/or PCF providing services to the sender.

The identification information for identifying the sender may include a PLMN ID of the sender. At this time, the DDMNF, PKMF or PCF of the R-UE may receive the sender information of one or more B-UEs from a server of a positioning application or the third network device.

In this way, after the DDMNF, PLMF or PCF of the R-UE receives the sender information, it may request the security key of the B-UE from a serving DDMNF, PKMF or PCF of one or more B-UEs according to the PLMN ID included in the sender information.

Therefore, in some embodiments, the method further includes: when the UE is authorized to serve as the receiver of the positioning broadcast message, acquiring the security key of the sender of the positioning broadcast message.

For example, when the UE is authorized to serve as the receiver of the positioning broadcast message, the security key of the sender stored in the first network device is acquired.

For example, the first network device locally stores one or more security keys of the B-UE. In this case, the first network device may send the security key locally stored by itself to the UE authorized to serve as the B-UE through the first response message.

For another example, the first network device does not store the security key of the B-UE locally. In this case, the first network device may request the security key of the B-UE from another network device.

In some embodiments, the UE, that requests or expects to serve as the R-UE, requests the security key of the B-UE based on the positioning function. At this time, the first network device may store the security key of the B-UE and does not need to request the security key from other network devices. That is, in some embodiments, if the first request message includes the indicator of the positioning function, the first network device will store the security keys of one or more B-UEs corresponding to itself, and may directly provide the security key of one or more B-UEs stored by itself to the UE through the first response message.

In some other embodiments, if the UE, that requests or expects to serve as the R-UE, requests the security key of the B-UE based on the positioning application, then even if the first network device itself stores the security key, it will also return the sender information of the one or more B-UEs based on the server of the positioning application. If the UE requesting or expecting to serve as the R-UE and the B-UE belong to different PLMNs or have different serving DDNMFs, PKMFs or PCFs, the first network device may request the security key of the B-UE from a second network device of the other PLMN.

Therefore, when the UE is authorized to serve as the receiver of the positioning broadcast message, acquiring the security key of the sender stored in the first network device includes:
when the UE is authorized to serve as the receiver of the positioning broadcast message and the first network device does not store the security key of the sender, or when the UE is authorized to serve as the receiver of the positioning broadcast message and the first request message includes the service code of the positioning application or the indicator of the positioning function, sending a third request message to the second network device according to the sender information;
receiving a third response message returned by the second network device, in which the third response message includes the security key of the sender.

In summary, the first network device may locally acquire the security key of one or more B-UEs according to specific circumstances, and/or acquire the security key of one or more B-UEs from the second network device.

As shown in FIG. 4A, an embodiment of the present disclosure provides an information processing method, which is performed by a second network device and includes the following steps.

S3110, a third request message sent by a first network device is received.

S3120, a third response message is sent to the first network device according to the third request message, in which the third response message includes a security key of a sender, in which the sender is a UE that sends a positioning broadcast message when performing positioning.

The second network device may also be a core network device.

The core network device may include but is not limited to a DDNMF, a PKMF or a PCF of a B-UE.

In this case, the first network device may be a DDNMF, a PKMF or a PCF of an R-UE.

For example, when the R-UE and the B-UE belong to different PLMNs, the third request message sent by the first network device for the R-UE may be a key request message. When the first network device for the R-UE receives the first request message including a service code, it will send the third request message to the second network device according to sender information provided by a server of a positioning application. Therefore, the second network device will receive the third request message, and the second network device will carry the security key of the B-UE in the third response message and send it to the first network device. The first network device will further send the security key of the B-UE to the corresponding R-UE, so that the corresponding R-UE can perform security verification on the received positioning broadcast message.

In some embodiments, the third request message includes at least identification information for identifying a receiver. The identification information for identifying the receiver may be a user info ID or SUPI of the R-UE, etc., so as to facilitate the second network device to determine which UE is currently preparing to request to be the receiver of the positioning reference signal.

In some embodiments, if the second request message comes from the first network device, the first network device and the second network device are both core network devices, and therefore have a trust relationship with each other. At this time, the second network device may no longer authorize the request of serving as the R-UE, and may directly send the queried security key of one or more B-UEs to the first network device.

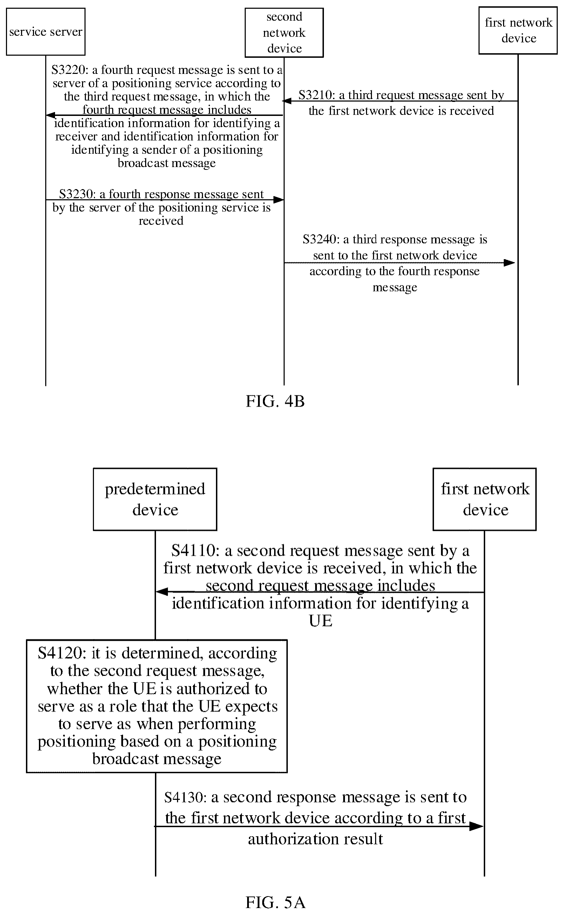

As shown in FIG. 4B, an embodiment of the present disclosure provides an information processing method, which is performed by a second network device and includes the following steps.

S3210, a third request message sent by the first network device is received.

S3220, a fourth request message is sent to a server of a positioning application according to the third request message, in which the fourth request message includes identification information for identifying a receiver and identification information for identifying a sender of a positioning broadcast message.

S3230, a fourth response message sent by the server of the positioning application is received.

S3240, a third response message is sent to the first network device according to the fourth response message.

In this embodiment, the second network device may receive identification information for identifying a UE requesting to serve as an R-UE, and may also receive identification information for identifying a B-UE. In this way, the second network device may also authorize whether the UE has the authority to receive the positioning broadcast message broadcast by one or more specified B-UEs. When authorizing, the second network device may send the fourth request message to the server of the positioning application, to determine through the server of the positioning application for the requested service whether the R-UE can be authorized to receive the message broadcast by the B-UE. The authorization result of the server of the positioning application will be returned to the second network device through the fourth response message. The second network device will return the third response message to the first network device according to the fourth response message.

In some embodiments, sending the third response message to the first network device according to the fourth response message includes:
in a case that the fourth response message indicates that the authorization succeeds, the third response message including the security key of the sender is sent to the first network device; or in a case that the fourth response message indicates that the authorization fails, the response message not including the security key of the sender is sent to the first network device.

The authorization here may be understood as: the UE sending the first request message is authorized to serve as the R-UE when performing positioning, or the UE sending the first request message is authorized to receive the positioning broadcast message sent by the sender indicated by the fourth request message when performing the positioning application.

The authorization succeeding may be understood as the authorization being successful. The authorization failing may be understood as the authorization being failed.

Furthermore, if the fourth response message indicates that the authorization succeeds, a response success message is sent to the first network device, and the response success message will carry the security key and be transmitted to the first network device.

If the response message sent by the second network device may indicate the authorization failure through a failure indication or a failure cause indication, when the first network device receives the fourth response message including the failure indication or the failure cause indication, it is also convenient for the first network device to know that the authorization fails.

As shown in FIG. 5A, an embodiment of the present disclosure provides an information processing method, which is performed by a predetermined device, and includes the following steps.

S4110, a second request message sent by a first network device is received, in which the second request message includes identification information for identifying a UE.

S4120, it is determined, according to the second request message, whether the UE is authorized to serve as a role that the UE expects to serve as when performing positioning based on a positioning broadcast message.

S4130, in a case that it is determined that the UE is authorized to serve as the role that the UE expects to serve as when performing positioning based on the positioning broadcast message, a second response message is sent to the first network device.

The predetermined device may be at least one of:
a network device, for example, a core network device located in a core network. In the embodiments of the present disclosure, the network device includes but is not limited to a UDM and/or a UDR; or
a service server or an AF that may be located in the core network or outside the core network; a server that provides a positioning application and/or a service server that generates a requirement for the positioning application. For example, the service server may include a ranging/SL positioning application server.

If the first network device receives the first request message, it may perform authorization by sending the second request message to the predetermined device.

The second request message is sent based on the first request message, and the second request message includes at least identification information for identifying the UE carried in the first request message. The identification information for identifying the UE may include an SUPI and/or a user information ID, etc.

In some embodiments, the second request message further includes at least one of:
first indication information, in which the first indication information indicates the role that the UE expects to serve as when performing positioning, in which the roles include a sender of the positioning broadcast message, a receiver of the positioning broadcast message; second indication information, in which the second indication information indicates whether to perform positioning based on the positioning broadcast message; and/or third indication information indicating information related to a positioning requirement.

In some embodiments, the third indication information includes a service code of a positioning application, or an indicator of a positioning function.

When the predetermined device is the service server, the third indication information may include the service code of the positioning application.

When the predetermined device is the third network device, the third indication information may include the indicator of the positioning function.

The identification information for identifying the UE included in the second request message may be identification information for identifying a UE requesting to serve as an R-UE, or identification information for identifying a UE requesting to serve as a B-UE. Therefore, the first network device at this time may be a serving DDNMF, PKMF or PCF of the UE requesting to serve as the R-UE. The first network device may also be a serving DDNMF, PKMF or PCF of the UE requesting to serve as the B-UE.

After receiving the second request message, the predetermined device may acquire a first authorization result according to its own database record or authorization policy query. After acquiring the first authorization result, the first authorization result is carried in the second response message and returned to the first network device.

The first authorization result may indicate whether the UE indicated by the identification information carried by the second request message is authorized to serve as the R-UE or the B-UE that the UE requests to serve as.

For example, the first authorization result may include one or more bits, a bit value of the one or more bits may indicate that the authorization succeeds, and another bit value of the one or more bits may indicate that the authorization fails.

In this way, by authorizing the role that UE requests or expects to serve as, the security of UEs participating in the positioning between the UEs based on the positioning broadcast message can be ensured.

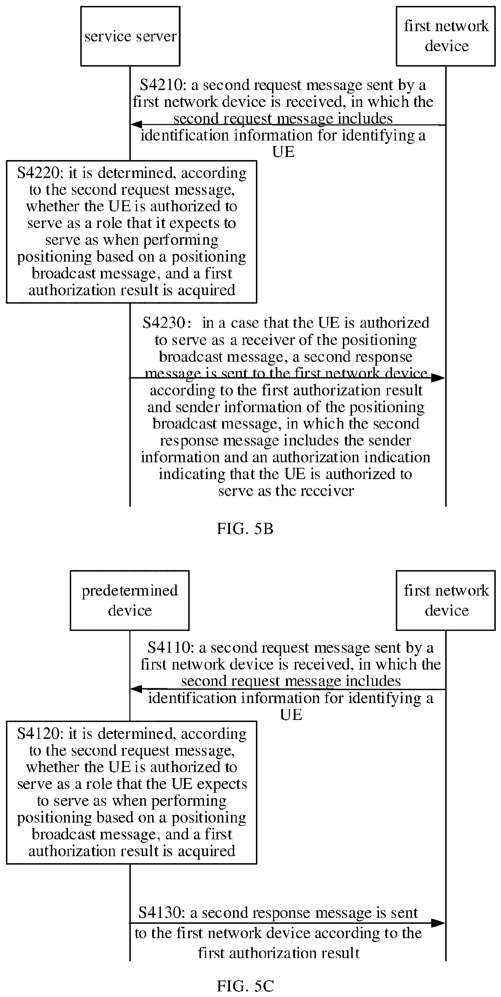

As shown in FIG. 5B, an embodiment of the present disclosure provides an information processing method, which is performed by a service server, and includes the following steps.

S4210, a second request message sent by a first network device is received, in which the second request message includes identification information for identifying a UE.

S4220, it is determined, according to the second request message, whether the UE is authorized to serve as a role that it expects to serve as when performing positioning based on a positioning broadcast message.

S4230, in a case that the UE is authorized to serve as a receiver of the positioning broadcast message, a second response message is sent to the first network device according to a first authorization result and sender information of the positioning broadcast message, in which the second response message includes the sender information and an authorization indication indicating that the UE is authorized to serve as the receiver.

In this embodiment of the present disclosure, when the identification information for identifying the UE included in the second request message is that of the UE requesting to serve as the R-UE, and the UE is authorized to serve as the R-UE, the predetermined device may also return the sender information to the first network device through the second response message. The sender information may include identification information for identifying the UE being authorized to serve as the sender of the positioning broadcast message, area information, and/or a sending parameter of the positioning broadcast message.

For example, if the predetermined device is the service server or the AF, it is necessary, when the UE is authorized to serve as the R-UE, to carry sender information of a UE being authorized to serve as a B-UE in the second response message and return it to the first network device. If the predetermined device is the third network device, it may be assumed that the first network device knows the information of the B-UE deployed, designated or officially authorized by a communication operator. Therefore, there is no need to return the sender information to the first network device at this time, and the second response message including only the authorization indication may be returned.

In some embodiments, as shown in FIG. 5C, the present disclosure provides an information processing method, which is performed by a third network device and includes the following steps.

S4310, a second request message sent by a first network device is received, in which the second request message includes identification information for identifying a UE.

S4320, it is determined, according to the second request message, whether the UE is authorized to perform a role that it expects to serve as when performing positioning based on a positioning broadcast message;
S4330, in a case that the UE is authorized to serve as a receiver of the positioning broadcast message, a second response message, indicating that the authorization succeeds, is sent to the first network device.

In some embodiments, in a case that the UE is not authorized to serve as the receiver of the positioning broadcast message, a response message indicating that the authorization fails is sent.

The third network device may be a network device, such as a UDM or a UDR of the core network.

When the third network device receives the second request message sent by the first network device, the second network device performs authorization to obtain a first authorization result, and returns the first authorization result to the first network device through the second response message, so that the first network device can continue to respond to the first request message of the UE.

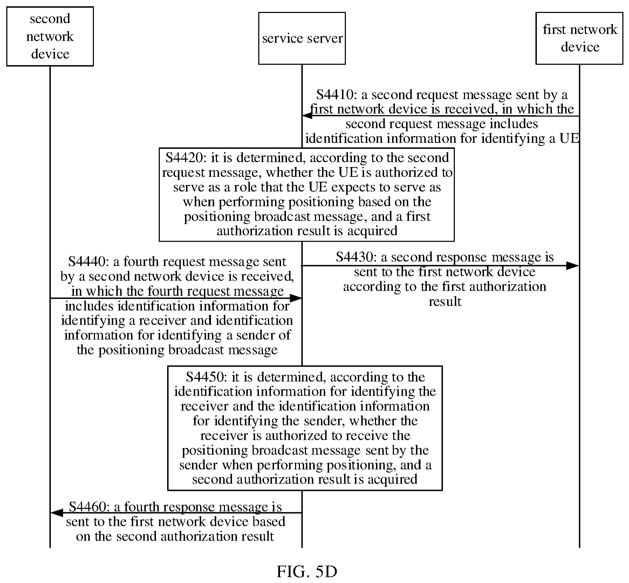

As shown in FIG. 5D, an embodiment of the present disclosure provides an information processing method, which is performed by a predetermined device and includes the following steps.

S4410, a second request message sent by a first network device is received, in which the second request message includes identification information for identifying a UE.

S4420, it is determined, according to the second request message, whether the UE is authorized to serve as a role that the UE expects to serve as when performing positioning based on the positioning broadcast message.

S4430, a second response message is sent to the first network device in a case that the UE is authorized to serve as the role that the UE expects to serve as when performing positioning based on the positioning broadcast message.

S4440, a fourth request message sent by a second network device is received, in which the fourth request message includes identification information for identifying a receiver and identification information for identifying a sender of the positioning broadcast message.

S4450, it is determined, according to the identification information for identifying the receiver and the identification information for identifying the sender, whether the receiver is authorized to receive the positioning broadcast message sent by the sender when performing positioning, and a second authorization result is acquired.

S4460, a fourth response message is sent to the first network device based on the second authorization result.

For example, if the UE is not authorized to serve as the role it expects to serve as when performing positioning based on the positioning broadcast message, a response message indicating failure is sent to the first network device. In this embodiment of the present disclosure, if the predetermined device is a service server or an AF, etc., the second network device may be involved. In some cases, the first network device may perform an authorization on a device that requests or expects to serve as an R-UE, and acquires a first authorization result. For a serving DDNMF, PLMF or PCF of the B-UE, the fourth request message will be sent to the predetermined device after receiving the third request message. The fourth request message will carry the identification information for identifying both the sender and the receiver. In this way, in combination with the fourth request message, it may be determined whether the receiver is authorized to receive the positioning broadcast message of the sender, and a second authorization result is acquired. After acquiring the second authorization result, the fourth response message may be sent to the first network device. The authorization based on the fourth request message may be a secondary authorization or a re-check.

In an embodiment of the present disclosure, the fourth response message may include:
a response success message, which may include an authorization indication indicating that the authorization succeeds; the authorization success may also be understood as authorization being successful;
a response failure message, which may include a failure indication and/or a failure cause, indicating that the authorization fails; the authorization failure may be understood as authorization being failed.

For example, the predetermined device includes a server that performs a positioning application; or a third network device supporting a positioning function.

The embodiments of the present disclosure provide the information processing methods to ensure that the positioning broadcast message sent by broadcast is not tampered with and/or eavesdropped.

The following embodiments are explained by taking the example of the SL positioning signaling sent by broadcast to prevent being tampered with and eavesdropped.

For a ranging/SL positioning application, each pair of users needs to discover each other and establish a unicast communication in order to exchange a ranging/SL positioning signaling. A discovery message is broadcast by the UE, and a security of the discovery message is protected by a discovery security material provided by the network. When the ranging/SL positioning signaling is broadcast, the establishment of the unicast connection is not required and no discovery operation is required between the UEs. However, a procedure of acquiring the discovery security material from a network device may be used to acquire a security key for protecting the broadcast ranging/SL positioning signaling. The discovery security material may include at least a discovery key used for security protection.

When some UEs need to broadcast the SL positioning signaling and some UEs need to receive the SL positioning signaling, under normal circumstances, the same ranging/SL positioning application will be broadcast and received at the same time. Otherwise, when the user of service A receive the broadcast SL positioning signaling of service B, the broadcast message (e.g., positioning assistance information) may be of no use to the receiving user, and the information of the broadcasting user of service A will be unnecessarily exposed to the receiving user of service B, which leads to the privacy issue. Therefore, when generating a shared security key for broadcast, the key should be bound to a specific ranging/SL positioning application (indicated by the RSSC).

The embodiments of the present disclosure provide an information processing method, which is performed by a communication system and includes the following steps that:
a UE sends a first request message to a first network device, in which the first request message includes identification information for identifying the UE;
the first network device receives the first request message sent by the UE, and sends a first response message to the UE;
the UE receives the first response message, in which the first response message includes a security key for protecting a positioning broadcast message;
in a case that the UE is authorized to serve as a sender of the positioning broadcast message, the UE broadcasts the positioning broadcast message protected with the security key; and
in a case that the UE is authorized to serve as a receiver of the positioning broadcast message, the UE receives the positioning broadcast message and verifies and/or decrypts the positioning broadcast message using the security key.

In this way, the UE can obtain the security key for performing positioning based on the positioning broadcast message through information interaction with the first network device.

The security key may include an integrity key and/or a confidentiality key.

The positioning here may include: positioning related to a positioning application and/or positioning related to a positioning function. A typical positioning application may include a ranging/SL positioning application.

In some embodiments, the method further includes the following steps that:
the first network device sends a second request message to a predetermined device according to the first request message, in which the second request message includes at least the identification information for identifying the UE and first indication information, in which the first indication information indicates a role that the UE expects to serve as when performing positioning;
the predetermined device receives the second request message, and determines, according to the second request message, whether the UE is authorized to serve as the role that the UE expects to serve as when performing positioning based on the positioning broadcast message; and the predetermined device sends a second response message to the first network device when determining that the UE is authorized to serve as the role that the UE expects to serve as when performing positioning based on the positioning broadcast message;
the first network device receives the second response message sent by the predetermined device; and
the first network device determines, according to the second response message, whether the UE is authorized to serve as the role that the UE expects to serve as when performing positioning;
in which in a case that the UE is authorized to serve as the role that the UE expects to serve as, the first response message includes the security key.

If the R-UE and the B-UE performing positioning have different serving DDNMFs, PKMFs and/or PCFs, the first network device may need to acquire the security key of the sender from a second network device.

In some embodiments, the method further includes the following steps that:
in a case that the UE serves as the receiver of the positioning broadcast message and the first network device does not store a security key of the sender, or in a case that the UE serves as the receiver of the positioning broadcast message and the first request message includes a service code of a positioning application or the indicator of the positioning function, the first network device sends a third request message to the second network device;
the first network device receives a third response message returned by the second network device, in which the third response message includes the security key.

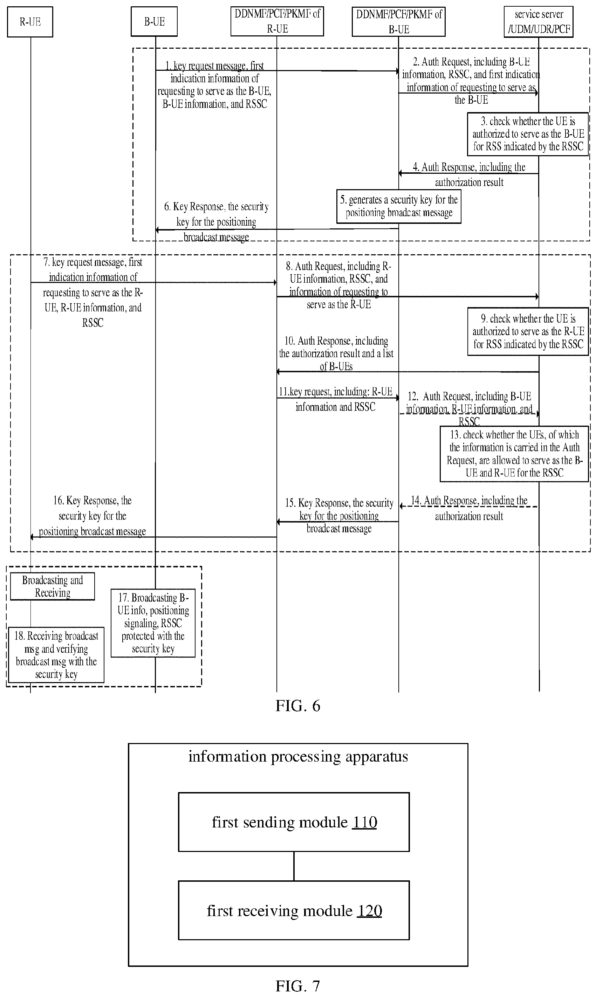

As shown in FIG. 6, the embodiments of the present disclosure provide an information processing method, which may include the following steps.
1. A UE (a B-UE) that intends, expects or requests to broadcast an SL positioning signaling sends a key request message to its PKMF, DDNMF or PCF. The message includes at least B-UE information, a ranging/SL positioning application code (RSSC) for which broadcasting is performed, and identification information for identifying the UE as a broadcast performer.
2~4. The PKMF, DDNMF or PCF of the B-UE checks with a ranging/SL positioning server whether the B-UE is authorized to perform broadcasting of a positioning signaling for the ranging/SL positioning application indicated by the RSSC.
5. The PKMF, DDNMF or PCF of the B-UE generates a security key by associating the security key with the RSSC. The security key, that may include an integrity key and a ciphering key, provide the B-UE with the necessary information to protect the broadcast message.
6. The PKMF, DDNMF or PCF of the B-UE sends the security key to the B-UE.
7. A UE intending to receive the broadcast SL positioning signal (an R-UE) sends a key request message to its PKMF, DDNMF or PCF. The message at least includes R-UE information, an RSSC corresponding to the received broadcast, and an indicator of the UE as a broadcast receiver.
8~10. The PKMF, DDNMF or PCF of the R-UE checks with the ranging/SL positioning server whether the R-UE is authorized to receive the broadcast positioning signaling for the ranging/SL positioning application indicated by the RSSC. In addition to the authorization result, the message also includes a list of B-UEs for which the ranging/SL positioning server provides the ranging/SL positioning application.
11. If the authorization succeeds, the PKMF, DDNMF or PCF of the R-UE sends a key request to the PKMF, DDNMF or PCF of the B-UE. The request contains at least the R-UE information and the RSSC. If the B-UE and the R-UE are served by the same PKMF, DDNMF or PCF, this step can be skipped. If the B-UE and the R-UE are served by the same PKMF, DDNMF or PCF, the PKMF, DDNMF or PCF of the R-UE will find the security key of the B-UE based on the identification information for identifying the B-UE provided from the ranging/SL positioning server. The key request may include at least the R-UE information and the RSSC.
12~14. The PKMF, DDNMF or PCF of the B-UE may optionally send an authorization request to the ranging/SL positioning server to check whether the B-UE and the R-UE are matching for broadcasting and receiving for the ranging/SL positioning application. The authorization request contains at least the B-UE information, the R-UE information, the RSSC and an authorization purpose, for example, an authorization for broadcasting the ranging/SL positioning application.
15. After the check with the ranging/SL positioning server succeeds, the PKMF, DDNMF or PCF of the B-UE responds to the PKMF, DDNMF or PCF of the R-UE with the security key for broadcasting. If the B-UE and the R-UE are served by the same PKMF, DDNMF or PCF, this step can be skipped.
16. The PKMF, DDNMF or PCF of the R-UE provides the security key for broadcasting to the R-UE.
17. The B-UE starts to broadcast the positioning signaling that is protected with the security key received from the network. The broadcast message includes at least the B-UE information, the SL positioning signaling and the RSSC information.
18. The R-UE starts to monitor the broadcast message. When receiving the broadcast message sent by the B-UE, the R-UE verifies the broadcast message using the security key received from the network.

For the UE: The UE shall be able to request the broadcast security key from the network (PKMF, DDNMF or PCF).

The UE should be able to include its information, the RSSC and the indicator of the UE being a broadcast actor/performer or receiver in the request message.

The UE shall be able to receive the security key for broadcasting from the network (PKMF, DDNMF or PCF).

The UE shall be able to protect the broadcast message with the security key received from the network.

The UE shall be able to verify the received broadcast message with the security key received from the network.

For the core network device, such as the PKMF, DDNMF or PCF on the network:

The PKMF, DDNMF or PCF shall be able to understand the request from the UE for generating/providing the security key.

The PKMF, DDNMF or PCF shall be able to check with the ranging/SL positioning server for authorizing whether the UE is allowed to perform or receive the broadcast positioning signaling for a specific ranging/SL positioning application.

The PKMF, DDNMF or PCF shall be able to generate the security key for broadcasting for a specific ranging/SL positioning application.

The PKMF, DDNMF or PCF shall be able to provide the security key for broadcasting the specific ranging/SL positioning application to the requesting UE.

The PKMF, DDNMF or PCF shall be able to request the security key for broadcasting from another PKMF, DDNMF or PCF based on the authorization result.

The PKMF, DDNMF or PCF shall be able to provide the security key for broadcasting to another PKMF, DDNMF or PCF based on the authorization result.

For the ranging/SL positioning server:
The ranging/SL positioning server shall be able to authorize that a specific UE is allowed to perform or receive the broadcast positioning signaling for a specific ranging/SL positioning application.

The ranging/SL positioning server shall be able to check whether a pair of UEs (the B-UE and the R-UE) is matching for performing and receiving the broadcast positioning signaling for a specific ranging/SL positioning application.

As shown in FIG. 7, an embodiment of the present disclosure provides an information processing apparatus, in which the apparatus includes:
a first sending module 110, configured to send a first request message to a first network device, in which the first request message includes identification information for identifying a UE;
a first receiving module 120, configured to receive a first response message from the first network device, in which the first response message includes a security key for protecting a positioning broadcast message.

The information processing apparatus provided by the embodiments of the present disclosure may be a UE, and the UE may be any terminal device that requests or expects to serve as a B-UE or an R-UE.

In some embodiments, the first receiving module 120 and the second receiving module may be program modules, and after the program modules are executed by a processor, the above operations can be implemented.

In some other embodiments, the first receiving module 120 and the second receiving module may be a combination of soft and hard modules. The combination of soft and hard modules include but are not limited to various programmable arrays. The programmable arrays include but are not limited to field programmable arrays and/or complex programmable arrays.

In some other embodiments, the first receiving module 120 and the second receiving module may be pure hardware modules, which include but are not limited to application specific integrated circuits.

In some embodiments, the first request message also includes first indication information, second indication information, and/or third indication information. The first indication information indicates a role that the UE expects to serve as when performing positioning, in which the roles include a sender of the positioning broadcast message, or a receiver of the positioning broadcast message. The second indication information indicates whether to perform positioning based on the positioning broadcast message. The third indication information indicates information related to a positioning requirement.

In some embodiments, the third indication information includes a service code of a positioning application or an indicator of a positioning function.

In some embodiments, in a case that the UE is authorized to serve as the role it expects to serve as when performing positioning, the first response message includes a security key.

In some embodiments, the first receiving module is further configured to, in a case that the UE is not authorized to serve as the role it expects to serve as when performing positioning, receive a response message sent by the first network device and not including the security key.

In some embodiments, the first sending module is configured to, in a case that the UE is authorized to serve as the sender of the positioning broadcast message, broadcast the positioning broadcast message protected with the security key.

In some embodiments, the first receiving module is further configured to, in a case that the UE is authorized to serve as the receiver of the positioning broadcast message, receive the positioning broadcast message; and the apparatus further includes:
a verification module, configured to verify and/or decrypt the positioning broadcast message using the security key.

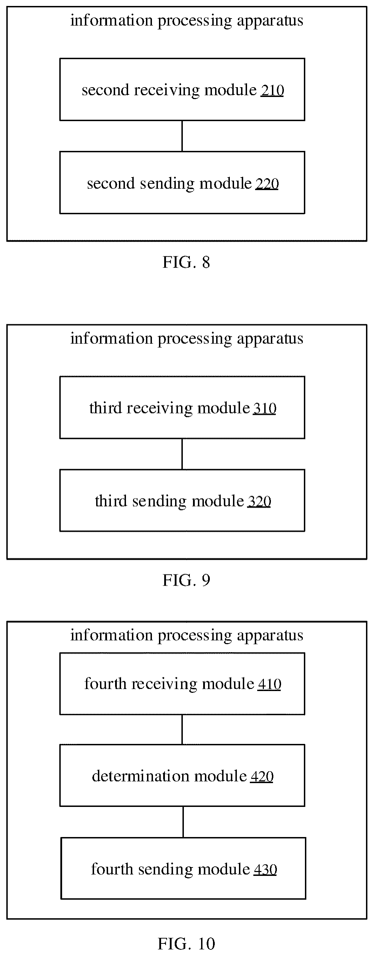

As shown in FIG. 8, an embodiment of the present disclosure provides an information processing apparatus, which is applied to a first network device, and includes:
a second receiving module 210, configured to receive a first request message sent by a UE, in which the first request message includes identification information for identifying the UE; =a second sending module 220, configured to send a first response message to the UE, in which the first response message includes a security key for protecting a positioning broadcast message.

The information processing apparatus provided by the embodiments of the present disclosure may be a first network device, and the first network device may be a core network device for serving the UE that requests or expects to serve as a B-UE or an R-UE. The core network device includes but is not limited to a DDNMF, PKMF or PCF.

In some embodiments, the second receiving module 210 and the second sending module 220 may be program modules, and after the program modules are executed by a processor, the above operations can be implemented.

In some other embodiments, the second receiving module 210 and the second sending module 220 may be a combination of soft and hard modules. The combination of soft and hard modules include but are not limited to various programmable arrays. The programmable arrays include but are not limited to field programmable arrays and/or complex programmable arrays.

In some other embodiments, the second receiving module 210 and the second sending module 220 may be pure hardware modules, which include but are not limited to application specific integrated circuits.

It can be understood that the first request message further includes first indication information, second indication information, and/or third indication information.

The first indication information indicates a role that the UE expects to serve as when performing positioning, in which the role includes a sender of the positioning broadcast message, or a receiver of the positioning broadcast message.

The second indication information indicates whether to perform positioning based on the positioning broadcast message.

The third indication information indicates information related to a positioning requirement.

It can be understood that the third indication information includes at least one of a service code of a positioning application or an indicator of a positioning function.

It can be understood that the apparatus also includes:
a verification module, configured to verify, according to the first indication information, that the UE is authorized to serve as the role that it expects to serve as when performing positioning;
the second sending module 220 is further configured to send the first response message including the security key to the UE, in a case that the UE is authorized to serve as the role that it expects to serve as when performing positioning; or
the second sending module 220 is further configured to send a response message not including the security key to the UE, in a case that the UE is not authorized to serve as the role it expects to serve as when performing positioning.

It can be understood that the verification module is configured to send a second request message to a predetermined device, in which the second request message includes at least the identification information for identifying the UE and the first indication information, in which the first indication information indicates the role that the UE expects to serve as when performing positioning;
to receive a second response message sent by the predetermined device; and
to determine, according to the second response message, whether the UE is authorized to serve as the role it expects to serve as when performing positioning.

In some embodiments, the second sending module 220 is configured to send the second request message to a server of the positioning application according to the service code, in a case that the first request message includes the service code of the positioning application; or to send the second request message to a third network device according to the indicator, in a case that the first request message includes the indicator of the positioning function.

In some embodiments, in a case that the UE is authorized to serve as the receiver of the positioning broadcast message, the second response message further includes sender information of the positioning broadcast message, in which the sender information is used by the first network device to determine a second network device for acquiring the security key.

In some embodiments, the apparatus further includes:
a generating module, configured to generate the security key when the UE is authorized to serve as the sender of the positioning broadcast message; or
an acquisition module, configured to acquire a security key of the sender of the positioning broadcast message when the UE is authorized to serve as the receiver of the positioning broadcast message.

In some embodiments, the acquisition module is configured to acquire the security key of the sender stored in the first network device when the UE is authorized to serve as the receiver of the positioning broadcast message.

In some embodiments, the acquisition module is configured to send a third request message to the second network device according to the sender information, in a case that the UE serves as the receiver of the positioning broadcast message and the first network device does not store the security key of the sender, or in a case that the UE serves as the receiver of the positioning broadcast message and the first request message includes the service code of the positioning application or the indicator of the positioning function; and receive a third response message returned by the second network device, in which the third response message includes the security key of the sender.

As shown in FIG. 9, an embodiment of the present disclosure provides an information processing apparatus, in which the apparatus includes:
a third receiving module 310, configured to receive a third request message sent by a first network device;
a third sending module 320, configured to send a third response message to the first network device according to the third request message, in which the third response message includes a security key of a sender, in which the sender is a UE that sends a positioning broadcast message when performing positioning.

The security key included in the third response message here is the security key of the sender. For example, it may be an integrity protection key and/or a confidentiality key generated according to identification information for identifying the sender.

In some embodiments, the third request message includes at least identification information for identifying a receiver; and
the third sending module 320 is configured to send a fourth request message to a server of a positioning application according to the third request message, in which the fourth request message includes the identification information for identifying the receiver and the identification information for identifying the sender of the positioning broadcast message;
the third receiving module 310 is configured to receive a fourth response message sent by the server of the positioning application; and
the third sending module 320 is further configured to send the third response message to the first network device according to the fourth response message.

In some embodiments, the third sending module 320 is further configured to send the third response message containing the security key of the sender to the first network device, when the fourth response message indicates that an authorization succeeds; or to send a response message not containing the security key of the sender to the first network device, when the fourth response message indicates that the authorization fails.

As shown in FIG. 10, an embodiment of the present disclosure provides an information processing apparatus, the apparatus includes:
a fourth receiving module 410, configured to receive a second request message sent by a first network device, in which the second request message includes identification information for identifying a UE;
a determination module 420, configured to determine, according to the second request message, whether the UE is authorized to serve as a role that the UE expects to serve as when performing positioning based on a positioning broadcast message; and
a fourth sending module 430, configured to send a second response message to the first network device in a case that the UE is authorized to serve as the role it expects to serve as based on the broadcast message.

In some embodiments, the fourth sending module 430 is configured to, when the UE is authorized to serve as a receiver of the positioning broadcast message, send a second response message to the first network device according to a first authorization result and sender information of the positioning broadcast message, in which the second response message includes the sender information and an authorization indication indicating that the UE is authorized to serve as the receiver.

In some embodiments, the fourth receiving module 410 is configured to receive a fourth request message sent by a second network device, in which the fourth request message includes identification information for identifying the receiver and identification information for identifying a sender of the positioning broadcast message;
the determination module 420 is configured to determine, according to the identification information for identifying the receiver and the identification information for identifying the sender, whether the receiver is authorized to receive the positioning broadcast message sent by the sender when performing positioning; and
the fourth sending module 430 is further configured to send a fourth response message to the first network device, in a case that the receiver is authorized to receive the positioning broadcast message sent by the sender when performing positioning.

In some embodiments, the predetermined device includes a server performing a positioning application, or a third network device supporting a positioning function.

The embodiments of the present disclosure provide a communication system, which includes a UE and a first network device.

The UE is configured to: send a first request message to a first network device, in which the first request message includes identification information for identifying the UE; receive the first response message, in which the first response message includes a security key for protecting a positioning broadcast message; in a case that the UE is authorized to serve as a sender of the positioning broadcast message, broadcast the positioning broadcast message protected with the security key; in a case that the UE is authorized to serve as a receiver of the positioning broadcast message, receive the positioning broadcast message, and verify and/or decrypt the positioning broadcast message using the security key.

The first network device is configured to: receive the first request message sent by the UE and send a first response message to the UE.

The first network device may include a DDNMF, a PKMF or a PCF of the UE.

It can be understood that the communication system further includes a predetermined device.

The first network device is further configured to: receive the first request message sent by the UE and send the first response message to the UE; receive a second response message sent by the predetermined device; determine, according to the second response message, whether the UE is authorized to serve as a role that it expects to serve as when performing positioning, in which in a case that the UE is authorized to serve as the role that it expects to serve as, the first response message includes the security key.

The predetermined device is configured to: receive the second request message, and determine, according to the second request message, whether the UE is authorized to serve as the role that the UE expects to serve as when performing positioning based on the positioning broadcast message; and send a second response message to the first network device when determining that the UE is authorized to serve as the role that the UE expects to serve as when performing positioning based on the positioning broadcast message.

It can be understood that the wireless system further includes a second network device.

The first network device is further configured to: in a case that the UE serves as the receiver of the positioning broadcast message and the first network device does not store a security key of the sender, or in a case that the UE serves as the receiver of the positioning broadcast message and the first request message includes a service code of a positioning application or the indicator of the positioning function, send a third request message to the second network device; and receive a third response message returned by the second network device, in which the third response message includes the security key of the sender.

The second network device is configured to: receive the third request message sent by the first network device; send the third response message to the first network device according to the third request message, in which the third response message includes the security key of the sender; in which the sender is a UE that sends the positioning broadcast message when performing positioning.

The embodiments of the present disclosure provide a communication device, including:
a memory for storing processor-executable instructions; and
a processor, connected with the memory;
in which the processor is configured to execute the information processing method provided by any of the aforementioned technical solutions.

The processor may include various types of storage media, which are non-transitory computer storage media that are able to continue to retain information stored thereon after the communication device loses power.

Here, the communication device includes a UE or a network device. The network device may be the aforementioned first network device, second network device, service server and/or third network device, etc.

The processor may be connected to the memory via a bus, etc., and is configured to read an executable program stored in the memory, to perform, for example, at least one of the methods shown in Figures 2A to 2C, Figures 3A to 3E, Figures 4A to 4B, Figures 5A to 5D or Figure 6.

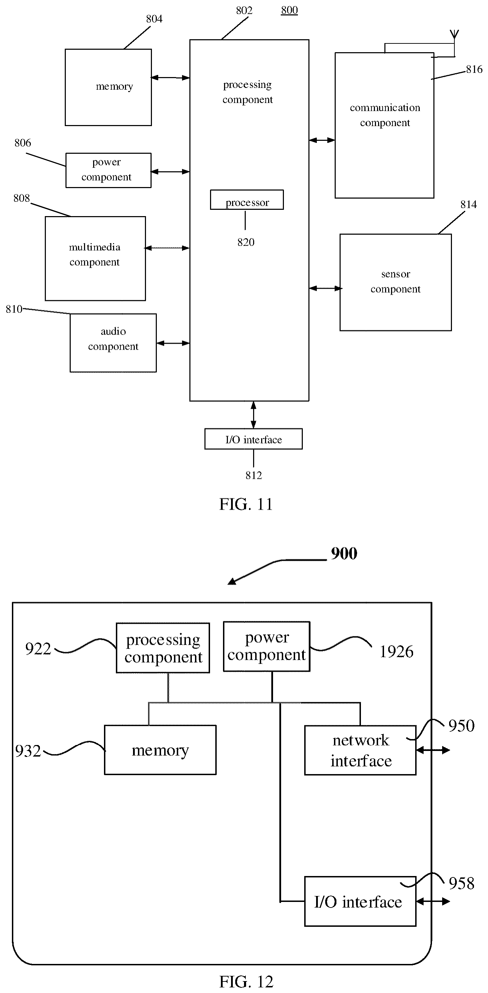

FIG. 11 is a block diagram of a UE 800 according to an example embodiment. For example, the UE 800 may be a mobile phone, a computer, a digital broadcast user device, a messaging device, a game console, a tablet device, a medical device, a fitness device, a personal digital assistant, etc.

Referring to FIG. 11, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above methods. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of such data include instructions for any application or method operating on the UE 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power supply component 806 provides power to various components of the UE 800. The power component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 808 includes a front-facing camera and/or a rear-facing camera. When the UE 800 is in an operation mode, such as a photographing mode or a video mode, the front camera and/or the rear camera may receive external multimedia data. Each of the front-facing camera and the rear-facing camera may be a fixed optical lens system or may have variable focal length and optical zoom capabilities.

The audio component 810 is configured to output and/or input audio signals. For example, the audio component 810 includes a microphone (MIC) configured to receive an external audio signal when the UE 800 is in an operation mode, such as a call mode, a recording mode, and a speech recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, etc. These buttons may include, but are not limited to: a home button, a volume button, a start button, and a lock button.

The sensor component 814 includes one or more sensors for providing state assessment of various aspects for the UE 800. For example, the sensor component 814 may detect the open/closed state of the device 800, the relative positioning of components, such as the display and keypad of the UE 800, the sensor component 814 may also detect the position change of the UE 800 or a component of the UE 800, the presence or absence of user contact with the UE 800, the orientation or acceleration/deceleration of the UE 800 and the temperature change of the UE 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communications between the UE 800 and other devices. The UE 800 may access a wireless network based on communication standards, such as WiFi, 2G or 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an example embodiment, the UE 800 may be implemented by one or more applicationspecific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, there is also provided a non-transitory computer-readable storage medium including instructions, such as the memory 804 including instructions, and the above instructions may be executed by the processor 820 of the UE 800 to generate the above methods. For example, the non-transitory computer-readable storage medium may be a ROM, a random access memory (RAM), a CD-ROM, a magnetic tape, a floppy disk, an optical data storage device, and the like.

As shown in FIG. 12, an embodiment of the present disclosure provides a network device. Referring to FIG. 12, the network device 900 includes a processing component 922, which further includes one or more processors, and a memory resource represented by a memory 932 for storing instructions executable by processing component 922, such as an application program. The application program stored in the memory 932 may include one or more modules each corresponding to a set of instructions. In addition, the processing component 922 is configured to execute instructions to perform the above-mentioned methods and any method applied to the access device, for example, at least one of the methods shown in Figures 2A to 2C, Figures 3A to 3E, Figures 4A to 4B, Figures 5A to 5D or Figure 6.

The network device 900 may also include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server ^{™} , Mac OS X ^{™} , Unix ^{™} , Linux ^{™} , FreeBSD ^{™} , or the like.

In the absence of contradiction, each step in a certain implementation mode or example may be implemented as an independent example, and the steps may be arbitrarily combined. For example, a solution after removing some steps in a certain implementation mode or example may also be implemented as an independent example, and the order of the steps in a certain implementation or embodiment may be arbitrarily exchanged. In addition, optional manners or optional examples in a certain implementation or embodiment may be arbitrarily combined. In addition, the various implementations or embodiments may be arbitrarily combined. For example, some or all steps of different implementations or embodiments may be arbitrarily combined, and a certain implementation or embodiment may be arbitrarily combined with the optional manners or optional examples of other implementations or embodiments.

Other implementations of the embodiments of the present disclosure will be apparent to those skilled in the art from consideration of the specification and practice of the invention disclosed herein. The present disclosure is intended to cover any modifications, uses or adaptive changes of the embodiments of the present disclosure, which follow the general principles of the embodiments of the present disclosure and include common knowledge or conventional technical means in the technical field that are not disclosed in the present disclosure. It is intended that the specification and examples be considered as exemplary only, with a true scope and spirit of the disclosed embodiments being indicated by the following claims.

It should be understood that the embodiments of the present disclosure are not limited to the exact structures that have been described above and shown in the drawings, and that various modifications and changes may be made without departing from the scope thereof. The scope of the embodiments of the present disclosure is limited only by the appended claims.

## Claims

1. An information processing method, performed by a user equipment (UE), comprising:
sending a first request message to a first network device, wherein the first request message comprises identification information for identifying the UE; and
receiving a first response message from the first network device, wherein the first response message comprises a security key for protecting a positioning broadcast message.

2. The method according to claim 1, wherein the first request message further comprises first indication information, second indication information, and/or third indication information;
the first indication information indicates a role that the UE expects to serve as when performing positioning, wherein the role comprises a sender of the positioning broadcast message or a receiver of the positioning broadcast message;
the second indication information indicates whether to perform positioning based on the positioning broadcast message; and
the third indication information indicates information related to a positioning requirement.

3. The method according to claim 2, wherein the third indication information comprises:
a service code of a positioning application or an indicator of a positioning function.

4. The method according to any one of claims 1 or 3, wherein
in a case that the UE is authorized to serve as the role that the UE expects to serve as when performing positioning, the first response message comprises the security key.

5. The method according to any one of claims 1 to 4, further comprising:
in a case that the UE is authorized to serve as the sender of the positioning broadcast message, broadcasting the positioning broadcast message protected with the security key.

6. The method according to any one of claims 1 to 4, further comprising:
in a case that the UE is authorized to serve as the receiver of the positioning broadcast message, receiving the positioning broadcast message; and
verifying and/or decrypting the positioning broadcast message using the security key.

7. An information processing method, performed by a first network device, comprising:
receiving a first request message sent by a user equipment (UE), wherein the first request message comprises identification information for identifying the UE; and
sending a first response message to the UE, wherein the first response message comprises a security key for protecting a positioning broadcast message.

8. The method according to claim 7, wherein the first request message further comprises first indication information, second indication information, and/or third indication information;
the first indication information indicates a role that the UE expects to serve as when performing positioning, wherein the role comprises a sender of the positioning broadcast message or a receiver of the positioning broadcast message;
the second indication information indicates whether to perform positioning based on the positioning broadcast message; and
the third indication information indicates information related to a positioning requirement.

9. The method according to claim 8, wherein the third indication information comprises at least one of a service code of a positioning application or an indicator of a positioning function.

10. The method according to any one of claims 7 to 9, further comprising:
verifying, according to the first indication information, whether the UE is authorized to serve as the role that the UE expects to serve as when performing positioning;
wherein sending the first response message to the UE comprises:
in a case that the UE is authorized to serve as the role that the UE expects to serve as when performing positioning, sending the first response message comprising the security key to the UE.

11. The method according to claim 10, wherein verifying, according to the first indication information, whether the UE is authorized to serve as the role that the UE expects to serve as when performing positioning comprises:
sending a second request message to a predetermined device, wherein the second request message comprises at least the identification information for identifying the UE and the first indication information, wherein the first indication information indicates the role that the UE expects to serve as when performing positioning;
receiving a second response message sent by the predetermined device; and
determining, according to the second response message, whether the UE is authorized to serve as the role that the UE expects to serve as when performing positioning.

12. The method according to claim 11, wherein sending the second request message to the predetermined device comprises:
in a case that the first request message comprises the service code of the positioning application, sending the second request message to a server of the positioning application according to the service code; or
in a case that the first request message comprises the indicator of the positioning function, sending the second request message to a third network device according to the indicator.

13. The method according to claim 12, wherein
in a case that the UE is authorized to serve as the receiver of the positioning broadcast message, the second response message further comprises sender information of the positioning broadcast message, wherein the sender information is used to determine a second network device, wherein the second network device is used for the first network device to acquire the security key.

14. The method according to any one of claims 7 to 13, further comprising:
in a case that the UE is authorized to serve as the sender of the positioning broadcast message, generating the security key; or
in a case that the UE is authorized to serve as the receiver of the positioning broadcast message, acquiring a security key of the sender of the positioning broadcast message.

15. The method according to claim 14, wherein in a case that the UE is authorized to serve as the receiver of the positioning broadcast message, acquiring the security key of the sender of the positioning broadcast message comprises:
in a case that the UE is authorized to serve as the receiver of the positioning broadcast message, acquiring the security key of the sender stored in the first network device.

16. The method according to claim 15, wherein in a case that the UE is authorized to serve as the receiver of the positioning broadcast message, acquiring the security key of the sender stored in the first network device comprises:
in a case that the UE serves as the receiver of the positioning broadcast message and the first network device does not store the security key of the sender, or in a case that the UE serves as the receiver of the positioning broadcast message and the first request message comprises the service code of the positioning application or the indicator of the positioning function, sending a third request message to the second network device;
receiving a third response message returned by the second network device, wherein the third response message comprises the security key of the sender.

17. An information processing method, performed by a second network device, comprising:
receiving a third request message sent by a first network device;
sending a third response message to the first network device according to the third request message, wherein the third response message comprises a security key of a sender, wherein the sender is a user equipment (UE) that sends a positioning broadcast message when performing positioning.

18. The method according to claim 17, wherein the third request message comprises at least identification information for identifying a receiver; and
sending the third response message to the first network device according to the third request message comprises:
sending a fourth request message to a server of a positioning application according to the third request message, wherein the fourth request message comprises the identification information for identifying the receiver and identification information for identifying the sender of the positioning broadcast message;
receiving a fourth response message sent by the server of the positioning application; and
sending the third response message to the first network device according to the fourth response message.

19. The method according to claim 18, wherein sending the third response message to the first network device according to the fourth response message comprises:
in a case that the fourth response message indicates that an authorization succeeds, sending the third response message comprising the security key of the sender to the first network device; or in a case that the fourth response message indicates that the authorization fails, sending the third response message not comprising the security key of the sender to the first network device.

20. An information processing method, performed by a predetermined device, comprising:
receiving a second request message sent by a first network device, wherein the second request message comprises identification information for identifying a user equipment (UE);
determining, according to the second request message, whether the UE is authorized to serve as a role that the UE expects to serve as when performing positioning based on a positioning broadcast message; and
sending a second response message to the first network device, in a case that it is determined that the UE is authorized to serve as the role that the UE expects to serve as when performing positioning based on the positioning broadcast message.

21. The method according to claim 20, wherein sending the second response message to the first network device, in a case that it is determined that the UE is authorized to serve as the role that the UE expects to serve as when performing positioning based on the positioning broadcast message, comprises:
in a case that the UE is authorized to serve as a receiver of the positioning broadcast message, sending the second response message to the first network device according to a first authorization result and sender information of the positioning broadcast message, wherein the second response message comprises the sender information and an authorization indication indicating that the UE is authorized to serve as the receiver.

22. The method according to claim 20 or 21, further comprising:
receiving a fourth request message sent by a second network device, wherein the fourth request message comprises identification information for identifying the receiver of the positioning broadcast message and identification information for identifying a sender of the positioning broadcast message;
determining, according to the identification information for identifying the receiver and the identification information for identifying the sender, whether the receiver is authorized to receive the positioning broadcast message sent by the sender when performing positioning;
sending a fourth response message to the first network device, wherein the fourth response message indicates whether the receiver has the authority to receive the positioning broadcast message when performing positioning.

23. The method according to any one of claims 20 to 22, wherein the predetermined device comprises:
a server performing a positioning application, or a third network device supporting a positioning function.

24. An information processing apparatus, comprising:
a first sending module, configured to send a first request message to a first network device, wherein the first request message comprises identification information for identifying a user equipment (UE); and
a first receiving module, configured to receive a first response message from the first network device, wherein the first response message comprises a security key for protecting a positioning broadcast message.

25. An information processing apparatus, applied to a first network device, comprising:
a second receiving module, configured to receive a first request message sent by a user equipment (UE), wherein the first request message comprises identification information for identifying the UE; and
a second sending module, configured to send a first response message to the UE, wherein the first response message comprises a security key for protecting a positioning broadcast message.

26. An information processing apparatus, comprising:
a third receiving module, configured to receive a third request message sent by a first network device; and
a third sending module, configured to send a third response message to the first network device according to the third request message; wherein the third response message comprises a security key of a sender; wherein the sender is a user equipment (UE) that sends a positioning broadcast message when performing positioning.

27. An information processing apparatus, comprising:
a fourth receiving module, configured to receive a second request message sent by a first network device, wherein the second request message comprises identification information for identifying a user equipment (UE);
a determination module, configured to determine, according to the second request message, whether the UE is authorized to serve as a role that the UE expects to serve as when performing positioning based on a positioning broadcast message; and
a fourth sending module, configured to send a second response message to the first network device in a case that it is determined that the UE is authorized to serve as the role that the UE expects to serve as when performing positioning based on the positioning broadcast message.

28. An information processing method, performed by a communication system, comprising:
sending, by a user equipment (UE), a first request message to a first network device, wherein the first request message comprises identification information for identifying the UE;
receiving, by the first network device, the first request message sent by the UE, and sending a first response message to the UE;
receiving, by the UE, the first response message, wherein the first response message comprises a security key for protecting a positioning broadcast message;
in a case that the UE is authorized to serve as a sender of the positioning broadcast message, broadcasting, by the UE, the positioning broadcast message protected with the security key;
in a case that the UE is authorized to serve as a receiver of the positioning broadcast message, receiving, by the UE, the positioning broadcast message, and verifying and/or decrypting, by the UE, the positioning broadcast message using the security key.

29. The method according to claim 28, further comprising:
sending, by the first network device, a second request message to a predetermined device according to the first request message, wherein the second request message comprises at least the identification information for identifying the UE and first indication information, wherein the first indication information indicates a role that the UE expects to serve as when performing positioning;
receiving, by the predetermined device, the second request message, and determining, according to the second request message, whether the UE is authorized to serve as the role that the UE expects to serve as when performing positioning based on the positioning broadcast message; and sending a second response message to the first network device in a case that it is determined that the UE is authorized to serve as the role that the UE expects to serve as when performing positioning based on the positioning broadcast message;
receiving, by the first network device, the second response message sent by the predetermined device; and
determining, according to the second response message, whether the UE is authorized to serve as the role that the UE expects to serve as when performing positioning;
wherein in a case that the UE is authorized to serve as the role that the UE expects to serve as, the first response message comprises the security key.

30. The method according to claim 28 or 29, further comprising:
in a case that the UE serves as the receiver of the positioning broadcast message and the first network device does not store a security key of the sender, or in a case that the UE serves as the receiver of the positioning broadcast message and the first request message comprises a service code of a positioning application or an indicator of a positioning function, sending a third request message to a second network device;
receiving a third response message returned by the second network device, wherein the third response message comprises the security key.

31. A communication system, comprising a user equipment (UE) and a first network device,
the UE being configured to: send a first request message to a first network device, wherein the first request message comprises identification information for identifying the UE; receive a first response message, wherein the first response message comprises a security key for protecting a positioning broadcast message; in a case that the UE is authorized to serve as a sender of the positioning broadcast message, broadcast the positioning broadcast message protected with the security key; and in a case that the UE is authorized to serve as a receiver of the positioning broadcast message, receive the positioning broadcast message, and verify and/or decrypt the positioning broadcast message using the security key, and
the first network device being configured to receive the first request message sent by the UE and to send the first response message to the UE.

32. The system according to claim 31, further comprising a predetermined device,
the first network device being further configured to: receive the first request message sent by the UE and send the first response message to the UE; receive a second response message sent by the predetermined device; determine, according to the second response message, whether the UE is authorized to serve as a role that the UE expects to serve as when performing positioning, wherein in a case that the UE is authorized to serve as the role that the UE expects to serve as, the first response message comprises the security key, and
the predetermined device being configured to: receive the second request message, and determine, according to the second request message, whether the UE is authorized to serve as the role that the UE expects to serve as when performing positioning based on the positioning broadcast message; and send the second response message to the first network device in a case that it is determined that the UE is authorized to serve as the role that the UE expects to serve as when performing positioning based on the positioning broadcast message.

33. The system according to claim 31 or 32, further comprising a second network device,
the first network device being further configured to: in a case that the UE serves as the receiver of the positioning broadcast message and the first network device does not store a security key of the sender, or in a case that the UE serves as the receiver of the positioning broadcast message and the first request message comprises a service code of a positioning application or an indicator of a positioning function, send a third request message to the second network device; and receive a third response message returned by the second network device, wherein the third response message comprises the security key of the sender, and
the second network device being configured to: receive the third request message sent by the first network device; send the third response message to the first network device according to the third request message, wherein the third response message comprises the security key of the sender, wherein the sender is a UE that sends the positioning broadcast message when performing positioning.

34. A communication device, comprising a processor, a transceiver, a memory, and an executable program stored in the memory and capable of being run by the processor, wherein the processor, when running the executable program, executes the method according to any one of claims 1 to 6, 7 to 16, 17 to 19, 20 to 23, or 28 to 30.

35. A computer storage medium storing an executable program, wherein after the executable program is executed by a processor, the method according to any one of claims 1 to 6, 7 to 16, 17 to 19, 20 to 23, or 28 to 30 is implemented.
